# FASCICULE DE BREVET EUROPEEN

(11) **EP 3 058 158 B1**
(45) Date de publication et mention de la délivrance du brevet: **03.06.2020**
(21) Numéro de dépôt: 14790244.9
(22) Date de dépôt: 10.10.2014
(51) Int. Cl.: E05F 5/02

(54) **DISPOSITIF DE TAMPON À BUTÉE AUTO AJUSTABLE**
SELBSTEINSTELLENDE ANSCHLAGSPUFFERVORRICHTUNG
SELF-ADJUSTING BUFFER STOP DEVICE

(30) Priorité: 14.10.2013 FR 1359978
(43) Date de publication de la demande: 24.08.2016
(73) Titulaire: A. Raymond et CIE-SCS, 38000 Grenoble (FR)
(72) Inventeur: DUPREZ, Rémi, F-05000 Gap (FR); ALBARAN, Jean-François, F-38760 Varces (FR); LAMOUREUX, David, F-38100 Grenoble (FR); GIRAUD, Sylvain, F-38360 Noyarey (FR)
(74) Mandataire: Prugneau, Philippe
(86) Numéro de dépôt international: PCT/FR2014/052574
(87) Numéro de publication internationale: WO 2015/055921

(56) Documents cités:
- EP-A2- 0 738 838
- EP-A2- 0 892 140
- US-A- 6 088 878
- US-A1- 2002 003 993

## Description

### Domaine technique

L'invention concerne un dispositif de tampon à butée auto-ajustable, destiné tout particulièrement à supporter un premier composant sur un deuxième composant, notamment une partie mobile de carrosserie d'un véhicule automobile de type haillon de coffre arrière, capot, portière ou volet, sur une partie fixe de la caisse du véhicule.

### Technique antérieure

Du document de brevet EP-0738838 ou EP-0892140, on connaît un tel dispositif de tampon à butée auto-ajustable, comprenant une tête de tampon en forme de tige et une embase dans laquelle la tête de tampon en forme de tige peut être enfoncée axialement par cran, et comprenant en outre un moyen de blocage actionnable pour bloquer en position axiale la tête de tampon en forme de tige dans l'embase.

De façon générale, le montage d'un tel dispositif de tampon à butée auto-ajustable se fait en plusieurs étapes.

Dans un premier temps, la tête de tampon en forme de tige est pré-positionnée et bloquée dans l'embase en étant insérée faiblement dans celle-ci, c'est-à-dire qu'elle n'est pas complètement enfoncée dans celle-ci.

Cet ensemble est alors fixé par exemple sur la partie fixe du coffre arrière d'un véhicule automobile sur lequel vient se rabattre le haillon de coffre arrière par exemple.

Ensuite, le haillon de coffre arrière est fermé une première fois sur la partie fixe du coffre arrière du véhicule.

La tête de tampon s'auto-ajuste alors en position axiale dans l'embase, c'est à dire qu'elle s'enfonce par cran dans l'embase sous l'effet de la force de poussée exercée par le haillon de coffre jusqu'à une position où elle affleure le haillon de coffre arrière qui est alors complètement fermé.

Ensuite on ouvre le haillon de coffre arrière. La tête de tampon en forme de tige est alors verrouillée en position axiale dans l'embase par une manoeuvre du moyen de blocage de façon à ce que la tête de tampon en forme de tige ne puisse plus entrer dans l'embase et qu'elle puisse donc être une butée à une prochaine fermeture du haillon de coffre arrière.

Dans ce dispositif connu de tampon à butée auto-ajustable, la tête de tampon en forme de tige présente sur sa longueur à sa surface périphérique extérieure une succession de stries ou gorges annulaires jointives étagées suivant la direction axiale de la tige.

L'embase comporte un alésage qui présente sur sa hauteur à sa surface intérieure également une succession de stries ou gorges annulaires jointives étagées suivant la direction axiale de l'alésage, les stries dans l'alésage étant destinées à s'engager dans les stries de la tête de tampon en forme de tige ce qui a pour effet d'augmenter les forces de friction tout en permettant un déplacement relatif par cran.

Dans ce dispositif connu de tampon à butée auto-ajustable, le moyen de blocage actionnable pour bloquer en position axiale la tête de tampon dans l'embase est une vis auto-taraudeuse qui traverse axialement la tige de la tête de tampon, la tige étant creuse à l'intérieur.

Par ailleurs, l'extrémité de la tige de la tête de tampon qui est enfoncée dans l'embase est fendue selon la direction axiale pour définir des pattes flexibles expansibles radialement ce qui fait que quand la vis est enfoncée dans la tige, elle écarte radialement les pattes de la tige et il en résulte un serrage de la tige dans l'embase par expansion radiale et donc un blocage en position axiale de la tête de tampon dans l'embase.

Les constructeurs de véhicules automobiles souhaitent avoir en plus une précontrainte avec ce type de dispositif de tampon à butée auto-ajustable qui fait que lorsque le haillon de coffre arrière par exemple est fermé comme indiqué plus haut, on a un effet d'amortissement du haillon de coffre arrière sur la tête du tampon montée sur la partie fixe du coffre du véhicule.

Pour cela, dans le document de brevet indiqué ci-dessus, il est proposé de monter une contrebutée d'épaisseur calibrée sur le bord du haillon de coffre arrière.

L'installation d'un dispositif de tampon à butée auto-ajustable connu du document indiqué ci-dessus comporte donc les opérations suivantes :
- on fixe l'embase sur une partie fixe d'un véhicule, la tête de tampon étant légèrement enfoncée dans l'embase;
- on ferme une première fois la partie mobile correspondante du véhicule sur cette partie fixe. Il en résulte alors un enfoncement subséquent par cran de la tête de tampon dans l'embase jusqu'à une position d'auto-ajustage où la tête de tampon affleure la partie mobile qui est alors fermée;
- on ouvre la partie mobile puis on verrouille en position axiale la tête de tampon dans l'embase par une action de serrage de la vis dans la tige filetée de la tête de tampon;
- et on place une contrebutée d'épaisseur calibrée, par exemple en forme de bouchon de quelque millimètres d'épaisseur, sur la partie mobile du véhicule pour introduire une précontrainte entre la butée auto-ajustable et la contrebutée.

Du document de brevet EP-0738838 B1, on connaît un dispositif de tampon à butée auto-ajustable qui permet d'introduire cette précontrainte de façon plus simple et plus rapide.

Avec ce dispositif connu, l'étape de montage de la contrebutée calibrée est supprimée en introduisant la précontrainte dans une même opération avec le verrouillage en position axiale de la tête de tampon dans l'embase du dispositif de tampon.

Néanmoins, ce dispositif connu présente comme inconvénients d'une part d'être une fixation par serrage et adhérence qui à la longue à tendance à lâcher prise, et d'autre part il comporte quatre pièces distinctes engendrant des coûts de fabrication importants.

### Exposé de l'invention

L'invention a pour objet un dispositif de tampon à butée auto-ajustable, comprenant un tête de tampon en forme de tige et une embase dans laquelle la tête de tampon en forme de tige peut être enfoncée axialement, et comprenant en outre une bague annulaire insérée axialement dans un alésage axial de l'embase et actionnable en rotation pour bloquer en position axiale la tête de tampon dans l'embase, la bague comprenant un bord inférieur définissant une rampe de poussée conçue pour, lors de la mise en rotation de la bague, produire un effet de came avec l'alésage axial dans un chambrage du fond de l'embase et permettre le rehaussement de la tête de tampon, caractérisé en ce que :
- la tige de la tête de tampon présente sur toute sa longueur au moins un méplat et adjacent à au moins un méplat au moins une zone de stries ou gorges jointives qui forment des crans,
- la bague a une surface intérieure qui comporte au moins une bande longitudinale lisse qui s'étend axialement et au moins une bande longitudinale striée qui s'étend adjacente à au moins la bande lisse,
- la tige de la tête de tampon est bloquée en rotation sous le chambrage de l'embase,
- la surface annulaire extérieure de la bague est munie d'un chemin de came définissant un profil de came qui coopère avec au moins un doigt suiveur de came prévu sur le bord supérieur de l'alésage,
- et la bague et la tige de tête de tampon sont conçues de sorte que la bague a une première position angulaire dans l'embase selon laquelle la tête de tampon peut être enfoncée par cran dans la bague et une seconde position angulaire selon laquelle la tête de tampon est bloquée en position axiale dans les stries de la bague.

Le dispositif de tampon à butée auto-ajustable selon l'invention peut présenter les particularités suivantes :
- la tige de la tête de tampon peut présenter sur toute sa longueur deux méplats diamétralement opposés et entre les deux méplats les stries ou gorges jointives qui forment les crans,
- la bague a une surface intérieure qui peut comporter deux bandes longitudinales lisses qui s'étendent axialement et deux bandes longitudinales striées qui s'étendent entre les bandes lisses,

- l'un au moins des deux méplats comprend en outre au moins une patte flexible présentant un bossage à extrémité crantée conçu pour faire face aux bandes striées de la bague lorsque la tête de tampon est enfoncée dans la bague,
- la bague est actionnable par un mouvement de rotation du type 1/4 de tour,
- la bague peut comporter une collerette de préhension avec des oreilles servant de témoin de bon montage,
- l'embase peut comporter un système de fixation du type à baïonnette pour se fixer sur un support plat muni d'un trou à oreilles,
- le système de fixation du type à baïonnette peut comporter des ailettes radiales étagées axialement pour s'adapter à différentes épaisseurs du support.

Avec cet agencement selon l'invention, dès la rotation de la bague autour de la tige de la tête de tampon, il se produit un blocage mécanique positif par une mise en contact de deux surfaces en opposition en deux deux endroits distincts, à savoir entre les crans de la tête de tampon et les stries de la bague et entre le chemin et le doigt de came. Il en résulte une excellente tenue dans le temps de la position axiale de la tête de tampon dans l'embase sans risque d'un glissement relatif indépendamment de la matière avec laquelle est réalisée la tête de tampon ou l'embase.

Avec cet agencement, on peut régler de manière très fine la hauteur axiale de la tête de tampon dans l'embase. Plus particulièrement, avec le système de crans, la hauteur de réglage fixée lors de la première fermeture du haillon ou capot est obtenue avec une grande précision. Ensuite, la rehausse de la tête de tampon est réglée de la même manière avec une grande précision. Cette précision du réglage en hauteur est obtenue même si il existe un certain jeu entre la tête de tampon et la bague de blocage. Il s'ensuit que cette précision de la « précontrainte » permet d'obtenir un bon niveau anti-vibration quand le capot du véhicule par exemple est fermé.

Contrairement au dispositif connu du brevet US-5735511, le dispositif selon l'invention ne met pas en œuvre un blocage par flexion de certains éléments lequel qui présente l'inconvénient qu'après le réglage initial, la tête de tampon subit une contrainte interne, avant même la fermeture du capot pour une utilisation de la tête de tampon comme moyen anti-vibration. Ces contraintes internes ont pour effet de diminuer la tenue à la fatigue de cette pièce (la matière s'écrase dans le temps et l'épaisseur diminue, même si on ne ferme pas le capot). Avec le dispositif selon l'invention, la tête de tampon ne subit pas de contrainte interne permanente car la sollicitation mécanique n'intervient uniquement qu'à la fermeture du capot du véhicule par exemple.

### Présentation sommaire des dessins

La présente invention sera mieux comprise et d'autres avantages apparaîtront à la lecture de la description qui suit et des dessins annexés dans lesquels :
- la figure 1 illustre très schématiquement un dispositif de tampon à butée auto-ajustable prévu pour s'ajuster automatiquement à une fente entre une partie fixe d'un châssis de véhicule et une partie mobile de la carrosserie du véhicule;
- la figure 2 est une vue en perspective du dispositif de tampon à butée auto-ajustable;
- la figure 3 est une vue en éclatée des éléments constitutifs du dispositif de tampon à butée auto-ajustable montré sur la figure 2;
- la figure 4 est une vue en coupe axiale du dispositif de la figure 3 dans une première position angulaire de la bague dans l'embase;
- la figure 5 est une vue en coupe axiale du dispositif de la figure 3 dans une seconde position angulaire de la bague dans l'embase ;
- la figure 6 est une vue en coupe transversale de l'embase suivant la coupe BB sur la figure 4 ;
- la figure 7 montre un trou de fixation à oreilles pour la fixation du dispositif de tampon selon l'invention montré sur les figures 1 à 6 ;
- la figure 8 montre un exemple de profil de la rampe de poussée du côté de la bague ;
- la figure 9 montre le même profil de la rampe de poussée du côté de l'embase dans laquelle tourne la bague.

### Description d'un mode de réalisation

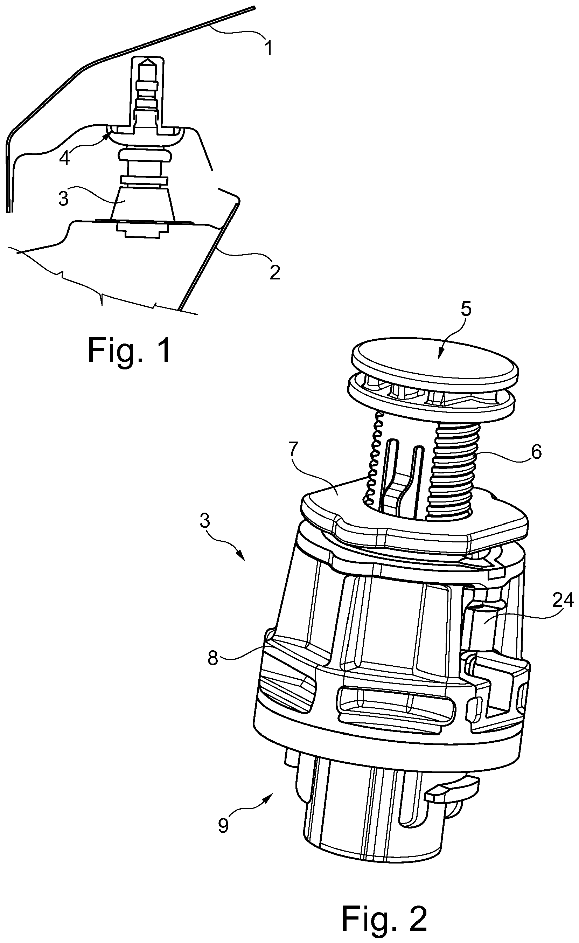

La figure 1 illustre une partie mobile 1 de la carrosserie d'un véhicule, ici le haillon de coffre arrière du véhicule, qui ferme une partie fixe 2 de la caisse du véhicule, dans le cas présent la partie fixe du coffre arrière du véhicule.

Une butée auto-ajustable 3 selon l'invention est montée ici sur la partie fixe de coffre 2 tandis qu'une contrebutée optionnelle 4 est montée sur le haillon mobile 1 pour définir une fente de séparation entre le haillon mobile 1 et la partie fixe 2 de coffre du véhicule.

La contrebutée 4 peut être fixée par clipage ou analogue sur le haillon de coffre 1. Elle peut comporter une tête élastique, par exemple en élastomère qui vient en contact avec une tête de tampon de la butée auto-ajustable 3 quand le haillon 1 est fermé.

Sur la figure 2, la butée auto-ajustable 3 selon l'invention comprend une tête de tampon 5 qui se présente essentiellement sous la forme d'une tige 6, l'extrémité de la tête de tampon pouvant être dans un matériau élastique comme de l'élastomère.

La tête de tampon 5 sur la figure 2 présente une extrémité supérieure qui constitue la butée et qui est ici en forme de disque, la tige 6 de la tête de tampon 5 s'étendant perpendiculairement sous le disque.

La tige 6 est ici montrée partiellement enfoncée dans une bague 7 montée à l'intérieur d'un alésage dans une embase 8 constituant le corps de la butée auto-ajustable. La partie inférieure 9 de l'embase 8 forme une fixation du type à baïonnette pour la fixation de la butée auto-ajustable ici sur la partie fixe de coffre 2.

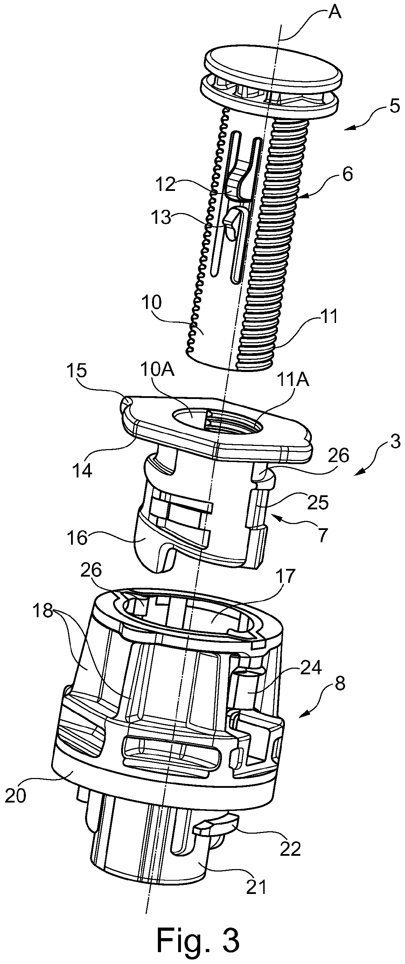

Sur la figure 3, on a représenté en éclatée cette butée auto-ajustable 3 selon l'invention.

Comme visible sur la figure 3, la tige 6 de la tête de tampon 5 s'étend suivant une direction axiale A.

Elle a la forme d'une portion verticale de cylindre et présente sur toute sa longueur au moins un méplat 10, ici dans l'exemple deux méplats 10 diamétralement opposés (un seul étant visible sur la figure 3).

Entre les deux méplats opposés 10, la tige 6 comporte sur toute sa longueur des stries ou gorges 11 jointives qui forment des crans.

Sur l'un ou les deux méplats 10, il peut être prévu une première patte flexible 12 qui présente un bossage d'extrémité crantée.

En outre, il est prévu une seconde patte flexible 13, disposée ici sous la patte 12, qui présente aussi un bossage d'extrémité crantée.

Comme visible sur la figure 3, les deux pattes 12,13 sont disposées en alignement axial et en opposition.

La bague 7 de forme essentiellement cylindrique sert de verrou pour bloquer ou verrouiller en position axiale la tête de tampon 5 dans l'embase 8.

Elle comporte sur son bord supérieur une collerette 14 qui sert à la manoeuvrer manuellement en rotation dans l'embase 8 en la prenant en pince entre deux doigts.

La collerette 14 peut être munie de deux oreilles 15 diamétralement opposées qui servent à faciliter la manoeuvre et aussi de témoin de bon montage.

La bague 7 présente encore un bord inférieur qui présente un certain profil pour définir une rampe de poussée 16 qui coopère ici avec un épaulement intérieur de l'embase comme décrit plus loin.

La bague 7 comporte un alésage à section transversale oblongue qui s'étend suivant la direction axiale A. Cet alésage de la bague 7 comporte sur sa surface intérieure au moins une bande longitudinale lisse 10A, ici deux bandes longitudinales lisses 10A qui s'étendent suivant la direction A et entre ces deux bandes 10A deux autres bandes longitudinales striées 11A.

Comme cela ressort de la figure 3, la tête de tampon 5 est insérée dans la bague 7 suivant une orientation angulaire telle que les pattes 12 et 13 (et donc les méplats 10) font face aux bandes striées 11A de la bague et que les stries 11 de la tête de tampon font face aux bandes lisses 10A de la bague.

L'embase 8 constitue comme indiqué plus haut le corps de la butée auto-ajustable 3. Elle se présente comme une douille avec un culot sous la douille.

L'embase 8 comporte un alésage axial 17 sensiblement cylindrique dans lequel est disposée coaxialement la bague 7.

Comme visible sur la figure 3, la structure de l'embase 8 peut être renforcée par des nervures radiales 18 disposées sur la surface périphérique extérieure de l'embase 8.

La partie médiane 20 de l'embase 8 qui correspond à la base de la douille est de forme annulaire et est réalisée par exemple en élastomère pour former un joint d'étanchéité.

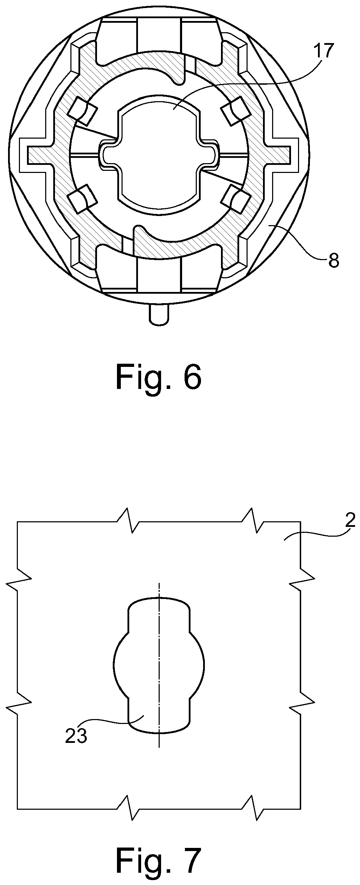

Le culot 21 de l'embase 8 est pourvu d'ailettes radiales 22 pour former un système de fixation du type à baïonnette adapté pour une fixation de l'embase 8 dans un trou à oreilles 23 comme illustré sur la figure 7.

Des doigts flexibles non représentés sur les figures sont disposés sous la partie médiane 20 pour venir en appui élastique sur le bord du trou à oreilles 23 ce qui fait que la fixation de l'embase dans le trou à oreilles se fait par un mouvement pousser-tourner.

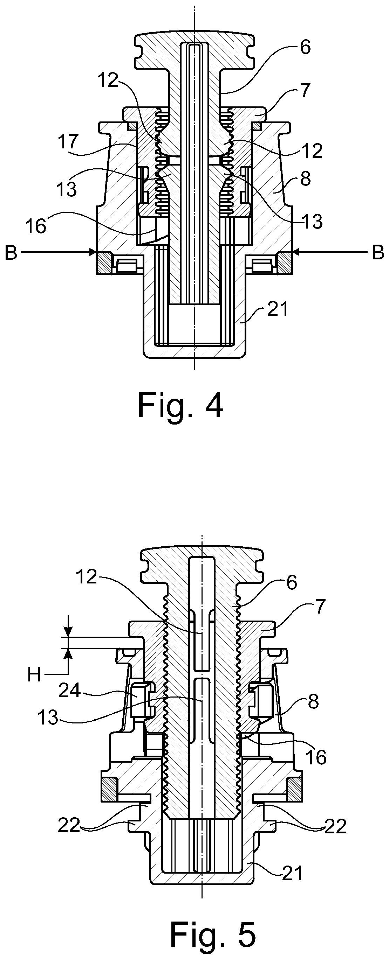

Selon l'invention, une précontrainte entre la contrebutée 4 optionnelle montrée sur la figure 1 et la butée auto-ajustable 3 est obtenue par une rehausse de la tête de tampon 5 (la tige 6) dans l'embase 8 lorsque la bague 7 est tournée dans l'alésage 17 de l'embase 8 pour verrouiller en position axiale la tête de tampon 5 dans l'embase comme illustré par les figures 4 et 5.

Les figures 4 et 5 sont des vues en coupe axiale du dispositif de tampon selon l'invention respectivement quand la tige 6 de la tête de tampon est enfoncée dans l'embase 8 (après l'étape de fermeture du haillon mobile sur la partie fixe de coffre) et quand cette tige 6 est bloquée en position axiale dans l'embase.

Comme visible sur la figure 4, l'alésage 17 de l'embase 8 présente un chambrage dans lequel est disposée la bague 7.

L'alésage 17 se poursuit sous le chambrage dans la partie de culot 21 de l'embase. Cette partie d'alésage sous le chambrage a la forme d'une portion de cylindre avec une section complémentaire à celle de la tige 6.

Cette partie de l'alésage 17 est montrée sur la figure 6 en coupe transversale suivant la coupe B-B sur la figure 4. Elle comporte ici deux méplats diamétralement opposés ce qui fait que la tige 6, lorsqu'elle est insérée dans cette partie de l'alésage 17 comme montré sur la figure 4, est bloquée en rotation suivant l'axe A.

Maintenant sur la figure 5, la bague 7 a été tournée de 1/4 de tour par rapport à la figure 4, ce qui fait que les crans de la tige 6 se sont engagés dans les stries 11A de la bague 7, la bague 7 ayant tournée autour de la tige 6 qui est restée immobile en rotation par rapport à l'embase 8.

En même temps, le mouvement en rotation de la rampe de poussée 16 à la base de bague 7 a produit par un effet de came avec le fond du chambrage dans l'alésage 17 une translation axiale vers le haut de la bague 7 dans l'embase 8 provoquant une rehausse relative de la tête de tampon 5 d'une hauteur H dans l'embase 8.

La bague 7 peut être verrouillée dans la position angulaire représentée sur la figure 5 par exemple par le jeu d'un cliquet 24 formé dans la surface intérieure de l'alésage 17, ce cliquet s'engageant dans une encoche 25 ménagée sur la surface extérieure de la bague 7 comme illustré sur la figure 3. Il est possible d'avoir deux cliquets diamétralement opposés.

On remarquera sur la figure 3 que la surface annulaire extérieure de la bague 7 peut être munie de chemins de came tel que 26 définissant un profil de came identique à la rampe de poussée 16 et qui coopèrent avec au moins un doigt suiveur de came, ici deux doigts suiveurs tel que 26', prévu sur le bord supérieur de l'alésage 17.

Dans l'exemple, le profil de la rampe de poussée 16 ou des chemins de came 26 sont tels qu'une rotation de 1/4 de tour de la bague 7 dans l'embase 8 provoque une translation axiale H calibrée correspondant à la rehausse souhaitée, qui peut par exemple être de 1,5 mm.

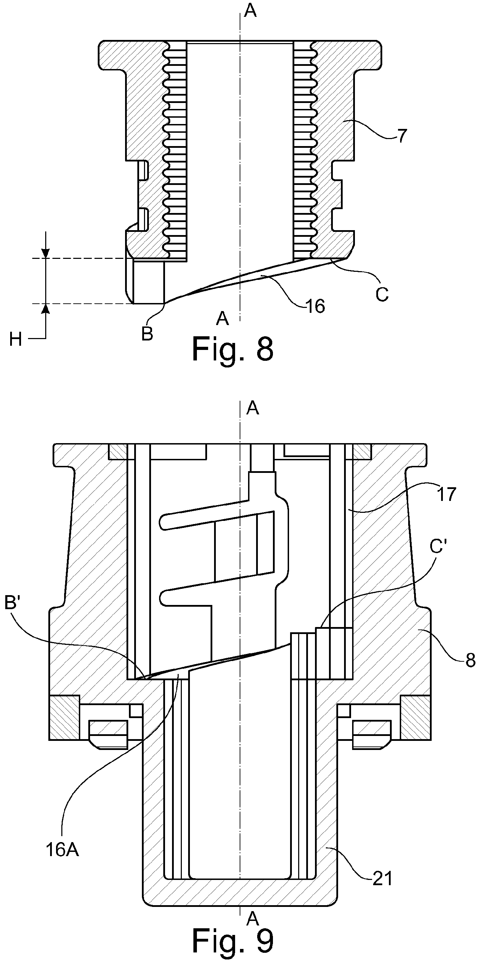

Sur la figure 8, on a illustré sur une vue en coupe axiale de la bague 7, un exemple de profil de la rampe de rehausse 16 prévue à la partie inférieure de la bague 7.

Le profil est ici un profil hélicoïdal qui s'étend sur une moitié du périmètre du bord inférieur annulaire de la bague 7 entre un point bas B et un point haut C.

Le bord inférieur de la bague 7 se déplace sur un épaulement annulaire dans l'embase 8 qui est constitué par le fond 16A du chambrage de l'alésage 17 comme représenté sur la figure 9, cet épaulement annulaire ayant un profil complémentaire à celui de la rampe de rehausse 16 qui s'étend entre un point bas B' et un point haut C'.

La hauteur H de la rehausse correspond ici à la distance suivant l'axe A entre le point bas B et le point haut C de la rampe hélicoïdale 16 si on effectue dans le cas présent une rotation d'1/4 tour de la bague 7 dans l'embase 8 à partir d'une position relative de la bague 7 dans l'embase 8 où les points bas B et B' et les points hauts C et C' des profils 16 et 16A respectivement coïncident jusqu'à une position relative où le point bas B du profil 16 se trouve en coïncidence avec le point haut C' du profil 16A.

En variante, on peut avoir un profil de rampe de poussée et de came qui permet plusieurs rehausses consécutives de la tête de tampon sans sortir du cadre de l'invention. Par exemple, on pourrait avoir une première rehausse pour une première rotation d'1/4 de tour de la bague, puis une seconde rehausse pour une seconde rotation subséquente de 1/4 de tour de la bague 7 dans l'embase 8.

De façon avantageuse, avec l'agencement ci-dessus, lorsque la bague 7 a tourné de 1/4 de tour, le verrouillage en position axiale de la tête de tampon 5 dans l'embase 8 est terminé et en même temps la translation axiale de rehausse de la tête de tampon est complète, cette terminaison de mouvement étant marquée par l'engagement du cliquet 24 dans l'encoche 25.

Par ailleurs, dans cette position de verrouillage de la bague 7 dans l'embase 8, on peut prévoir que les oreilles 15 de la collerette 14 de la bague 7 se présentent en alignement avec des oreilles correspondantes prévues sur le bord supérieur de l'embase 8 comme illustré sur la figure 2 ce qui constitue le témoin de bon montage et de bon verrouillage de la tête de tampon en position rehaussée dans l'embase 8.

Comme indiqué ci-dessus, le culot 21 de l'embase 8 présente des ailettes 22 étagées suivant la direction axiale A.

Sur la figure 5, on voit plus particulièrement des ailettes 22 diamétralement opposées par rapport à l'axe A. Ces ailettes 22 sont dimensionnées pour passer dans les oreilles du trou 23. Toutefois, comme visible sur la figure 5, chaque ailette 22 forme deux épaulements étagés suivant la direction axiale et qui sont décalés radialement ce qui permet de fixer l'embase 8 sur des supports d'épaisseurs différentes, typiquement sur un support en tôle d'une épaisseur d'environ 0,67 à 0,77mm et sur un support en matière plastique d'une épaisseur d'environ 3mm.

Les différentes étapes de montage d'une butée auto-ajustable 3 avec rehausse de la tête de tampon selon l'invention est maintenant décrite en référence avec la figure 1 pour séparer un premier composant 1 du type haillon, coffre, volet ou autre partie mobile de carrosserie d'un véhicule automobile et un second composant 2 du type partie fixe de caisse du véhicule, avec une fente constante et aussi pour obtenir un effet d'amortissement quand le premier composant est fermé sur le second composant.

Selon l'invention, on fixe l'embase 8 de la butée 3 sur le second composant 2 par exemple, avec un système de fixation du type à baïonnette, la tige 6 de la butée étant légèrement enfoncée dans l'embase 8 par exemple jusqu'au niveau du bossage des pattes 12 comme illustré sur la figure 2.

On approche le premier composant 1 vers le second composant 2 de telle sorte à enfoncer la tige 6 par crans successifs dans l'embase 8 jusqu'à ce qu'elle occupe une position d'affleurement avec le second composant.

On éloigne le premier composant du second composant.

On rehausse la tige 6 dans l'embase 8 en actionnant le moyen de blocage 7 qui bloque la tige 6 dans l'embase 8, par exemple par un mouvement de rotation de 1/4 de tour.

Le premier composant 1 peut être fermé de nouveau sur le second composant, une précontrainte ayant alors été introduite par l'effet de la rehausse de la tige de tampon dans l'embase 8.

Le dispositif de tampon à butée auto-ajustable selon l'invention contribue donc à simplifier le processus de montage d'une butée auto-ajustable entre deux composants comme présenté ci-dessus. Par ailleurs, le dispositif de tampon à butée auto-ajustable selon l'invention contribue à diminuer globalement le temps nécessaire pour réaliser un tel montage.

Sans sortir du cadre de l'invention, on pourrait encore prévoir que la rampe de poussée 16 soit constituée par des stries hélicoïdales sur la tige 6 et sur l'alésage 17. On pourrait aussi réaliser la rehausse de la tête de tampon par le jeu d'une cale formant un coin venant s'enficher transversalement dans l'embase 8, cette cale servant aussi de moyen pour verrouiller en position axiale la tête de tampon dans l'embase 8.

Il est entendu que les différents éléments 5,7,8 et 9 de la butée auto-ajustable 3 selon l'invention peuvent être réalisés par moulage de matière plastique et que donc une telle butée auto-ajustable peut être fabriquée à faible coût. Ces éléments pourraient aussi être fabriqués par addition de matière dans une imprimante 3D si par exemple il s'agissait d'une fabrication en petites séries.

## Revendications

1. Dispositif de tampon à butée auto-ajustable, comprenant une tête de tampon (5) en forme de tige (6) et une embase (8) dans laquelle ladite tête de tampon (5) en forme de tige (6) peut être enfoncée axialement, et comprenant en outre une bague (7) annulaire insérée axialement dans un alésage axial (17) de ladite embase (8) et actionnable en rotation pour bloquer en position axiale ladite tête de tampon (5) dans ladite embase (8), ladite bague (7) comprenant un bord inférieur définissant une rampe de poussée (16) conçue pour, lors de la mise en rotation de ladite bague (7), produire un effet de came avec ledit alésage axial (17) dans un chambrage du fond de ladite embase (8) et permettre le rehaussement de ladite tête de tampon (5), **caractérisé en ce que** :
- ladite tige (6) de ladite tête de tampon (5) présente sur toute sa longueur au moins un méplat (10) et adjacent audit au moins un méplat (10) au moins une zone de stries ou gorges (11) jointives qui forment des crans,
- ladite bague (7) a une surface intérieure qui comporte au moins une bande longitudinale lisse (10A) qui s'étend axialement et au moins une bande longitudinale striée (11A) qui s'étend adjacente à au moins ladite bande lisse,
- ladite tige (6) de ladite tête de tampon (5) est bloquée en rotation sous ledit chambrage de ladite embase (8),
- la surface annulaire extérieure de ladite bague (7) est munie d'un chemin de came (26) définissant un profil de came qui coopère avec au moins un doigt suiveur de came (26') prévu sur le bord supérieur dudit alésage (17),
- et ladite bague (7) et ladite tige (6) de ladite tête de tampon (5) sont conçues de sorte que ladite bague (7) a une première position angulaire dans ladite embase (8) selon laquelle le au moins un méplat (10) fait face à la au moins une bande longitudinale striée (11A) et la au moins une zone de stries (11) fait face à la au moins une bande longitudinale lisse (10A), ladite tête de tampon (5) pouvant donc être enfoncée par cran dans ladite bague (7) et une seconde position angulaire selon laquelle les crans de la tige (6) de ladite tête de tampon (5) sont engagés dans lesdites stries (11A) de ladite bague (7) et ladite tête de tampon (5) est donc bloquée en position axiale.

2. Dispositif de tampon à butée auto-ajustable selon la revendication 1, **caractérisé en ce que** ladite tige (6) de ladite tête de tampon (5) présente sur toute sa longueur deux méplats (10) diamétralement opposés et entre lesdits deux méplats lesdites stries ou gorges (11) jointives qui forment lesdits crans.

3. Dispositif de tampon à butée auto-ajustable selon la revendication 1, **caractérisé en ce que** ladite bague (7) a une surface intérieure qui comporte deux bandes longitudinales lisses (10A) qui s'étendent axialement et deux bandes longitudinales striées (11A) qui s'étendent entre lesdites bandes lisses.

4. Dispositif de tampon à butée auto-ajustable selon la revendication 1, **caractérisé en ce que** l'un au moins desdits deux méplats (10) comprend en outre au moins une patte flexible (12, 13) présentant un bossage à extrémité crantée conçu pour faire face auxdites bandes striées de ladite bague (7) lorsque ladite tête de tampon (5) est enfoncée dans ladite bague (7).

5. Dispositif de tampon à butée auto-ajustable selon la revendication 1, **caractérisé en ce que** ladite bague (7) est actionnable par un mouvement de rotation du type 1/4 de tour.

6. Dispositif de tampon à butée auto-ajustable selon la revendication 1, **caractérisé** en ce ladite bague (7) comporte une collerette (14) de préhension avec des oreilles (15) servant de témoin de bon montage.

7. Dispositif de tampon à butée auto-ajustable selon la revendication 1, **caractérisé en ce que** ladite embase (8) comporte un système de fixation (21) du type à baïonnette.

8. Dispositif de tampon à butée auto-ajustable selon la revendication 7, **caractérisé en ce que** ledit système de fixation (21) du type à baïonnette comporte des ailettes (22) radiales étagées axialement.

## Patentansprüche

1. Puffereinrichtung mit automatisch einstellbarem Anschlag, umfassend einen Anschlagkopf (5) in Form eines Zapfens (6) und einen Sockel (8), in den der Anschlagkopf (5) in Form eines Zapfens (6) axial einführbar ist, und ferner umfassend einen in einer axialen Bohrung (17) des Sockels (8) axial eingesetzten ringförmigen Ringkörper (7), der zum Blockieren des Anschlagkopfes (5) in axialer Position in dem Sockel (8) drehbetätigbar ist, wobei der Ringkörper (7) einen inneren Rand umfasst, der eine Schieberampe (16) definiert, die dazu ausgebildet ist, bei in Rotation Versetzen des Ringkörpers (7) einen Nockeneffekt mit der axialen Bohrung (17) in einer Einsenkung des Grundes des Sockels (8) zu erzeugen und das Anheben des Anschlagkopfes (5) zu erlauben, **dadurch gekennzeichnet, dass**:
- der Zapfen (6) des Anschlagkopfes (5) über seine gesamte Länge wenigstens eine Abflachung (10) und benachbart zu der wenigstens einen Abflachung (10) wenigstens einen Rasten bildenden Bereich von aneinandergesetzten Riefen oder Rillen (11) aufweist,
- der Ringkörper (7) eine innere Fläche aufweist, die wenigstens einen sich axial erstreckenden längsverlaufenden glatten Streifen (10A) und wenigstens einen sich benachbart zu dem wenigstens einen glatten Streifen erstreckenden längsverlaufenden geriffelten Streifen (11A) umfasst,
- der Zapfen (6) des Anschlagkopfes (5) unter der Einsenkung des Sockels (8) bezüglich einer Drehung blockiert ist,
- die ringförmige äußere Fläche des Ringkörpers (7) einen Nockenpfad (26) mit einem Nockenprofil aufweist, das mit wenigstens einem auf dem oberen Rand der Bohrung (17) vorgesehenen Nockenfolgeglied (26') zusammenwirkt,
- und dass der Ringkörper (7) und der Zapfen (6) des Anschlagkopfes (5) derart ausgebildet sind, dass der Ringkörper (7) eine erste Winkelposition in dem Sockel (8), bei der die wenigstens eine Abflachung (10) dem wenigstens einen längsverlaufenden geriffelten Streifen (11A) zugekehrt ist und der wenigstens eine Bereich von Riefen (11) dem wenigstens einen längsverlaufenden glatten Streifen (10A) zugekehrt ist, wobei der Anschlagkopf (5) somit durch Rasten in den Ringkörper (7) einführbar ist, und eine zweite Winkelposition, bei der die Rasten des Zapfens (6) des Anschlagkopfes (5) in den Riefen (11A) des Ringkörpers (7) in Eingriff sind und der Anschlagkopf (5) somit in axialer Position blockiert ist, aufweist.

2. Puffereinrichtung mit automatisch einstellbarem Anschlag nach Anspruch 1, **dadurch gekennzeichnet, dass** der Zapfen (6) des Anschlagkopfes (5) über seine gesamte Länge zwei diametral gegenüberliegende Abflachungen (10) und zwischen den beiden gegenüberliegenden Abflachungen (10) die Rasten bildenden aneinandergesetzten Riefen oder Rillen (11) aufweist

3. Puffereinrichtung mit automatisch einstellbarem Anschlag nach Anspruch 1, **dadurch gekennzeichnet, dass** der Ringkörper (7) eine Innenfläche aufweist, die zwei sich axial erstreckende längsverlaufende glatte Streifen (10A) und zwei sich zwischen den glatten Streifen erstreckende längsverlaufende geriffelte Streifen (11A) umfasst.

4. Puffereinrichtung mit automatisch einstellbarem Anschlag nach Anspruch 1, **dadurch gekennzeichnet, dass** zumindest eine der beiden Abflachungen (10) ferner wenigstens einen flexiblen Finger (12, 13) umfasst, welcher einen Buckel mit verzahntem Ende aufweist, der dazu ausgebildet ist, den geriffelten Streifen des Ringkörpers (7) zugekehrt zu sein, wenn der Anschlagkopf (5) in den Ringkörper (7) eingeführt ist.

5. Puffereinrichtung mit automatisch einstellbarem Anschlag nach Anspruch 1, **dadurch gekennzeichnet, dass** der Ringkörper (7) durch eine Drehbewegung der Art 1/4 Kreis betätigbar ist.

6. Puffereinrichtung mit automatisch einstellbarem Anschlag nach Anspruch 1, **dadurch gekennzeichnet, dass** der Ringkörper (7) einen Greifkragen (14) mit Vorsprüngen (15) zum Nachweis ordnungsgemäßer Montage umfasst.

7. Puffereinrichtung mit automatisch einstellbarem Anschlag nach Anspruch 1, **dadurch gekennzeichnet, dass** der Sockel (8) ein Befestigungssystem (21) der Bauart Bajonett umfasst.

8. Puffereinrichtung mit automatisch einstellbarem Anschlag nach Anspruch 7, **dadurch gekennzeichnet, dass** das Befestigungssystem (21) der Bauart Bajonett radiale Rippen (22) umfasst, die axial abgesetzt sind.

## Claims

1. A buffer device with a self-adjustable stop, the device comprising a buffer head (5) in the form of a shank (6) and a socket (8) into which said buffer head (5) in the form of a shank (6) can be driven axially, the device further comprising an annular ring (7) inserted axially in an axial bore (17) of said socket (8) and actuatable in turning to block the axial position of said buffer head (5) in said socket (8), said ring (7) comprising a bottom edge defining a thrust ramp (16) designed, when said ring (7) is caused to turn, for producing a cam effect with said axial bore (17) in a counterbore in the end of said socket (8) and enabling said buffer head (5) to be raised, the device being **characterized in that**:
• said shank (6) of said buffer head (5) presents along its entire length at least one flat (10), and adjacent to said at least one flat (10), at least one zone of touching ribs or grooves (11) forming serrations;
• said ring (7) has an inside surface having at least one smooth longitudinal strip (10A) that extends axially, and at least one ribbed longitudinal strip (11A) that extends adjacent to the at least one said smooth strip;
• said shank (6) of said buffer head (5) is prevented from turning under said counterbore in said socket (8);
• the outer annular surface of said ring (7) is provided with a cam path (26) defining a cam profile that co-operates with at least one cam follower finger (26') provided on the top edge of said bore (17); and
• said ring (7) and said shank (6) of said buffer head (5) are designed so that said ring (7) has a first angular position in said socket (8) in which the at least one flat (10) is facing the at least one ribbed longitudinal strip (11A) and the at least one zone of touching ribs (11) is facing the at least one smooth longitudinal strip (10A), said buffer head (5) being then able be driven into said ring (7) serration by serration, and a second angular position in which the serrations of the shank (6) of said buffer head (5) are engaged in said ribs (11A) of said ring (7) and said buffer head (5) is blocked in axial position.

2. A buffer device with a self-adjustable stop according to claim 1, the device being **characterized in that** said shank (6) of said buffer head (5) presents along its entire length two diametrically opposite flats (10), and between said two flats, said touching ribs or grooves (11) that form said serrations.

3. A buffer device with a self-adjustable stop according to claim 1, the device being **characterized in that** said ring (7) has an inner surface with two smooth longitudinal strips (10A) extending axially and two ribbed longitudinal strips (11A) extending between said smooth strips.

4. A buffer device with a self-adjustable stop according to claim 1, **characterized in that** at least one of said two flats (10) further includes at least one flexible tab (12, 13) presenting a projection with a serrated end designed to face said ribbed strips of said ring (7) when said buffer head (5) is driven into said ring (7).

5. A buffer device with a self-adjustable stop according to claim 1, **characterized in that** said ring (7) is actuatable by a turning movement of the quarter-turn type.

6. A buffer device with a self-adjustable stop according to claim 1, **characterized in that** said ring (7) includes a grip collar (14) with lugs (15) serving to indicate proper assembly.

7. A buffer device with a self-adjustable stop according to claim 1, **characterized in that** said socket (8) includes a bayonet type fastener system (21).

8. A buffer device with a self-adjustable stop according to claim 7, **characterized in that** said bayonet type fastener system (21) has axially-stepped radially-extending fins (22).
